# EUROPÄISCHE PATENTSCHRIFT

(11) **EP 0 373 340 B1**
(45) Veröffentlichungstag und Bekanntmachung des Hinweises auf die Patenterteilung: **20.01.1993**
(21) Anmeldenummer: 89120333.3
(22) Anmeldetag: 03.11.1989
(51) Int. Cl.: G02B 6/38

(54) **Lösbare Steckverbindung zum Koppeln von zwei Lichtwellen-Leitern**
Demountable connector for coupling of two optical fibers
Connecteur démontable pour le couplage de deux fibres optiques

(30) Priorität: 16.12.1988 DE 3842368
(43) Veröffentlichungstag der Anmeldung: 20.06.1990
(73) Patentinhaber: QUANTE AG, 42109 Wuppertal (DE)
(72) Erfinder: Wetzels, Ralf, D-5609 Hückeswagen (DE); Rott, Joachim, D-1000 Berlin 37 (DE)
(74) Vertreter: Mentzel, Norbert, Dipl.-Phys.

(56) Entgegenhaltungen:
- EP-A- 0 044 953
- EP-A- 0 076 053
- DE-A- 2 844 744
- GB-A- 2 113 866
- US-A- 4 192 575
- US-A- 4 215 913
- US-A- 4 225 214

## Beschreibung

Die Erfindung richtet sich auf eine Steckverbindung der im Oberbegriff des Anspruches 1 angegebenen Art. Es werden dabei vorzugsweise drei prallele Zylinderstifte gleichen Durchmessers verwendet, die sich in einer Stifthalterung des Steckergehäuses befinden und in Querschnittansicht in einer Dreieck-Anordnung zueinander liegen. Zwischen den Zylinderstiften entsteht dadurch ein Axialspalt, in dem jeweils die vom Coating befreiten Faserenden der miteinander zu koppelnden Lichtwellen-Leiter verlaufen.

Die bekannte Steckverbindung dieser Art (DE-OS 28 44 744) bestand aus zueinander gleichgestalteten Steckern, deren Steckergehäuse becherförmige, längsgespaltete Stifthalterungen aufwiesen, in welche die drei Zylinderstifte mit etwa ihrer halben Länge lose eingeführt wurden. Durch eine axiale Bohrung im Becherboden wurde dann das vom Coating befreite Faserende des zugehörigen Lichtwellen-Leiters eingeschoben und das über die Zylinderstifte herausragende Endstück der Faserenden bündig abgeschnitten und an seiner Stirnfläche poliert. Die aus dem längsgespaltenen Becher der Stifthalterung heerausragenden Zylinderstifte der beiden Stecker wurden dann von gegenüberliegenden Seiten in eine einen durchgehenden Längsspalt aufweisende Buchse eingeführt und kamen bei der Montage zusammen mit den längsgespaltenen Bechern im Inneren einer starren Kupplungshülse zu liegen, die mit einem Außengewinde versehen war, auf welche dann eine zu jedem Stecker gehörende Überwurfmutter festgeschraubt wurde. Die Handhabung dieser Steckverbindung war zeitaufwendig und umständlich und es bestand die Gefahr, daß die Zylinderstifte dabei herausfallen und verloren gehen. Die längsgespaltene Buchse wirkte wie ein zweischenkeliger Federring und federte zentrisch unsymmetrisch aus. Damit ließ sich im Kupplungsfall keine ausreichend genaue radiale Zentrierung der beiden Faserenden in der Buchse erlangen.

Der Erfindung liegt die Aufgabe zugrunde, eine schnell und leicht zu handhabende Steckverbindung der im Oberbegriff des Anspruches 1 genannten Art zu entwickeln, die eine zuverlässige, die Montage nicht behindernde Halterung der Zylinderstifte gewährleistet und zugleich für eine exakte axiale und radiale Ausrichtung der beiden Faserenden in der Kupplung sorgt. Dies wird erfindungsgemäß durch die im Kennzeichen des Anspruches 1 angeführten Maßnahmen erreicht, denen folgende besondere Bedeutung zukommt.

Der Käfig an der Stifthalterung läßt eine Vormontage des Steckers mit den Zylinderstiften zu und ist immer wieder verwendbar zur Montage des Faserendes eines Lichtwellen-Leiters. Die Zylinderstifte sind im Käfig ausreichend beweglich für ein bequemes Hindurchfädeln des vom Coating befreiten Faserendes durch die Stifthalterung und können weder dabei noch beim Einkuppeln des Steckers in die gemeinsame Buchse der Kupplung verloren gehen. Der Käfig kann das Einkuppeln nicht behindern, weil seine parallel zu den Zylinderstiften verlaufenden Profilstäbe nur im Zwickelbereich angeordnet sind, aber einen kleineren Kreisumriß aufweisen als die Zylinderstifte, die mit ihren radialen Außenseiten aus dem Käfig frei herausragen. Dadurch können die Zylinderstifte mit ihren freiliegenden radialen Außenseiten im Kupplungsfall, ohne Beeinträchtigung durch den Käfig, die Buchse berühren, die in ungekuppeltem Zustand eine gegenüber dem Umkreis der Zylinderstifte kleinere lichte Öffnungsweite aufweist und an ihren Berührungszonen mit einer allseitig gleichen Spannkraft radial dehnbar ist. Jeder der Zylinderstifte wird folglich mit gleicher Spannkraft gegen das dazwischen liegende Faserende gedrückt und zentriert dadurch die Glasfaser exakt in der Mittelachse der Buchse. Die beidseitig in die gemeinsame Buchse eingeführten Stecker positionieren somit die Stirnflächen der beiden Faserenden in genauer radialer und axialer Ausrichtung.

Eine solche allseitig gleichförmig radial dehnbare Buchse könnte aus elastischem Material, wie Kunststoff, ausgebildet sein. Eine besonders abriebfeste Oberfläche und eine gute mechanische Festigkeit läßt sich aber mit einer metallischen Buchse nach Anspruch 2 oder 4 erzielen. Eine dennoch ausreichend große, exakt radial symmetrische Dehnbarkeit der Buchse wird dabei durch die dort angeführte gleichförmige Anordnung von Schlitzen im Buchsenmantel erreicht, die sich nur über eine Teillänge der Buchse erstrecken. Dadurch sind die Stecker und die Kupplung wiederholt steck- und lösbar, ohne die erstrebte Zentrierung der Faserenden in der Buchsen-Mittelachse im Kupplungsfall zu verlieren. Jeder Stecker ist zu jeder Kupplung kompatibel. Für die Ausgestaltung der Buchse gibt es zwei Wege, die in Anspruch 2 und 3 einerseits und Anspruch 4 andererseits angeführt sind, von denen jeder seine besonderen erfinderischen Vorteile bringt.

Eine Möglichkeit besteht darin, die insbesondere metallische Buchse durch Schlitze in elastische Abschnitte nach Anspruch 2 zu gliedern, die vorzugsweise gemäß Anspruch 3 ausgestaltet sind. Die andere Möglichkeit besteht darin, die Buchse käfigartig mit Stegen nach Anspruch 4 zu gestalten, deren Federeigenschaften für den allseitig gleichförmigen radialen Andruck der Zylinderstifte durch Verkröpfungen nach Anspruch 5 erzielbar sind. Damit lassen sich erfindungsgemäß auch lichtleitende Glasfaserkerne von Monomode-Fasern exakt zueinander zentrieren, die weniger als 0,01 mm betragen.

Für die diesen Zentriervorgang nicht behindernde Ausbildung des Käfigs empfiehlt es sich, seinen Profilstäben den aus Anspruch 6 ersichtlichen Querschnitt und seiner Endscheibe die Formgebung nach Anspruch 7 zu geben, um beim Einkuppeln des Steckers das Faserendstück zu schützen. Der Käfig kann dabei mit den Maßnahmen nach Anspruch 8 den axialen Abstand der Faserenden und die Einführtiefe der Stecker bestimmen. Störende Temperatureinflüsse lassen sich durch die Maßnahmen nach Anspruch 9 beheben. Die Maßnahmen nach Anspruch 10 und 11 lassen eine exakte Vormontage der Bestandteile des Steckers sowie eine exakte Kupplungsstellung der Stecker in der Buchse zu.

Weitere Maßnahmen und Vorteile der Erfindung ergeben sich aus den übrigen Ansprüchen, den Zeichnungen und der zugehörigen Beschreibung. Die Erfindung richtet sich dabei auf alle daraus entnehmbaren neuen Maßnahmen, auch wenn diese nicht ausdrücklich in den Ansprüchen angeführt sein sollten. In den Zeichnungen ist die Erfindung in mehreren Ausführungsbeispielen dargestellt. Es zeigen:
Fig. 1 in starker Vergrößerung und im Axialschnitt ein LWL-Kabel mit daran fertig angeschlossenem Stecker längs der Schnittlinie I-I von Fig. 4,
Fig. 2 in einer stärkeren Vergrößerung gegenüber Fig. 1 den Endbereich des dortigen Steckers,
Fig. 3 a und 3 b, in Vergrößerung, zueinander senkrechte Ansichten auf das beim Stecker von Fig. 1 verwendete Steckergehäuse,
Fig. 4 eine Querschnittansicht durch das vordere Ende des Steckers längs der Schnittlinie IV-IV von Fig. 2,
Fig. 5 den zentralen Bereich von Fig. 4 in sehr starker Vergrößerung mit diversen Umkreisen, die auch die lichte Weite einer zugehörigen Buchse verdeutlichen,
Fig. 6 und 7 in Vergrößerung die Längsschnitte durch zwei alternative Ausführungen einer Kupplung, welche zwei Stecker der aus den vorausgehenden Fig. ersichtlichen Art miteinander verbindet,
Fig. 8 in Vergrößerung den Längsschnitt einer bei der Kupplung verwendeten Buchse,
Fig. 9 und 10 Querschnittansichten der Buchse von Fig. 8 längs der Schnittlinie IX-IX bzw. X-X,
Fig. 11 den mittleren Bereich einer fertig gekuppelten Steckverbindung nach der Erfindung,
Fig. 12 einen Axialschnitt durch eine gegenüber Fig. 8 alternative Ausbildung der Buchse, wobei die Schnittführung XII-XII sich aus der nachfolgenden Fig. ergibt und
Fig. 13 einen Radialschnitt durch die Buchse von Fig. 12 längs der dortigen Schnittlinie XIII-XIII.

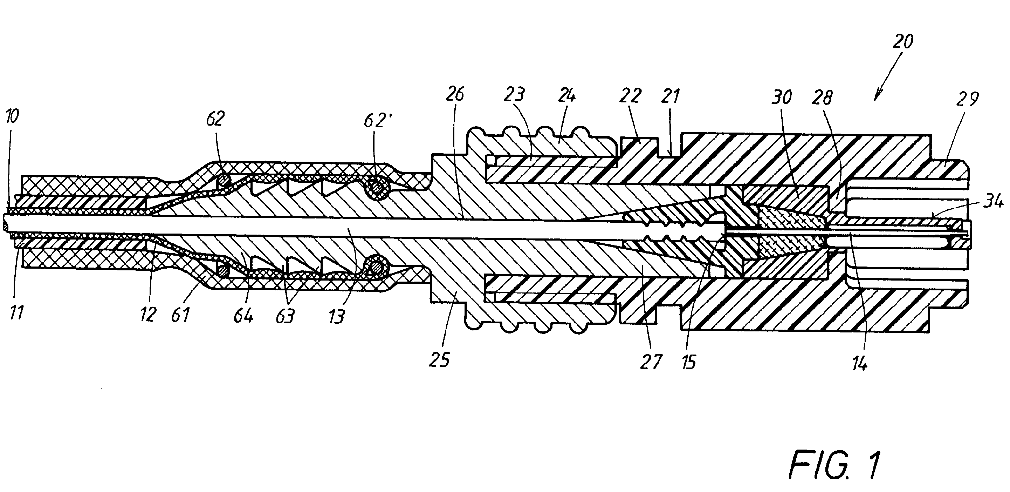

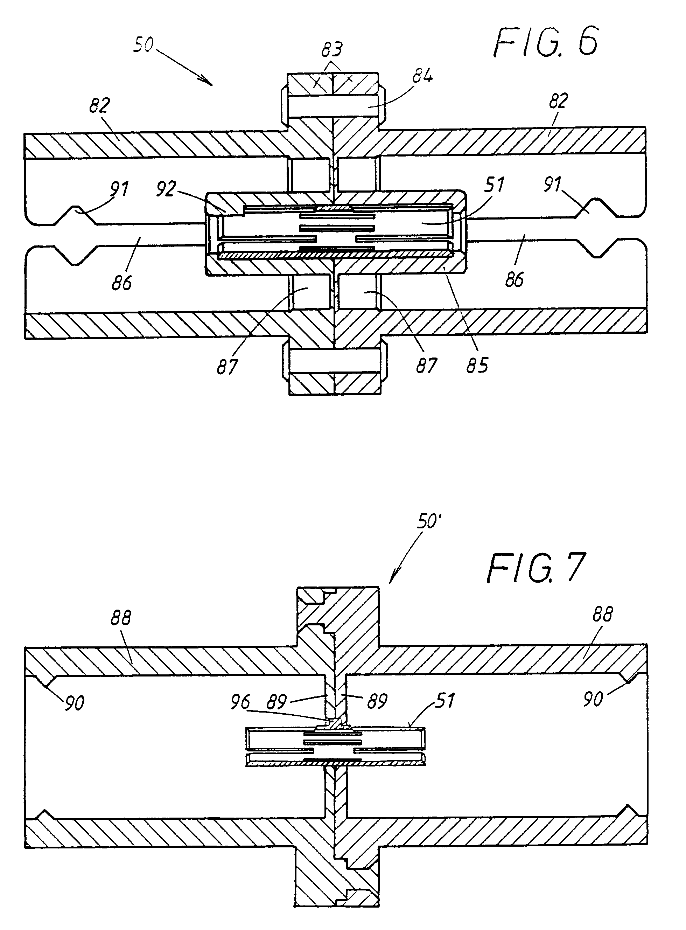

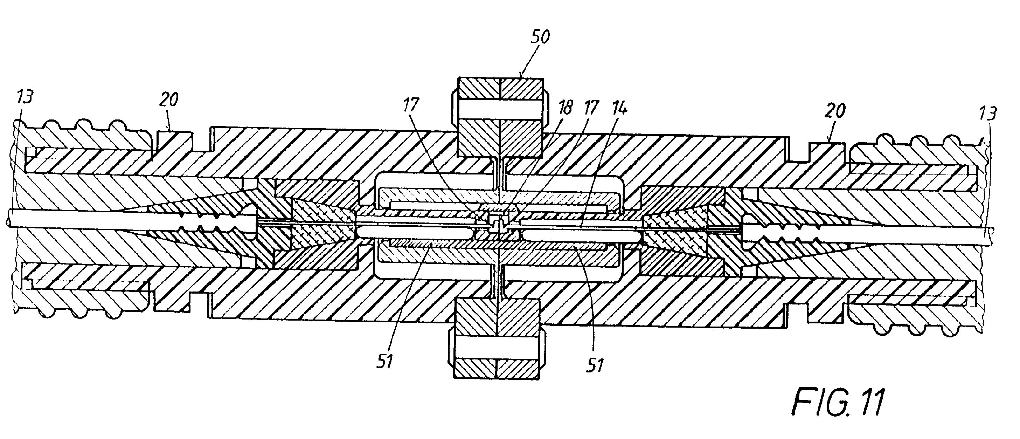

Ausweislich der Fig. 11 werden zwei Lichtwellen-Leiter 10 durch zwei zueinander völlig gleichgestaltete Stecker 20 über eine Kupplung 50 miteinander optisch verbunden. Dazu kommt es zunächst auf einen besonderen Aufbau des Steckers 20 an, was aus Fig. 1 bis 5 zu entnehmen ist. Das Kabel 10 kann zunächst einen Kunststoff-Schutzmantel 11 mit einem darin befindlichen Zugentlastungsgeflecht 12 umfassen. Unter diesem Geflecht befindet sich als Lichtwellen-Leiter eine Faser 13, die mit einem primären und sekundären Coating umschlossen ist und einen Außendurchmesser von ca. 0,9 mm aufweisen kann. Das Faserende 14 ist vom Coating befreit, so daß dort die nackte Glasfaser mit einem Durchmesser von ca. 0,1 mm verbleibt. Das verbleibende Coating läßt dabei eine Schulter 15 am Faserende 14 entstehen. Die Faser 13 ist im vorliegenden Fall eine Monomode-Faser, deren lichtleitender zentraler Kern einen Durchmesser von weniger als 0,01 mm einnimmt. Es kommt daher bei der erfindungsgemäßen Steckverbindung darauf an, gemäß Fig. 11, die beiden Stirnflächen 17 der zu koppelnden Faserenden 14 in der Kupplung 50 möglichst exakt miteinander auszurichten. Die Erfindung ermöglicht es, die Stirnflächen 17 in einem definierten axialen Abstand 18 zueinander zu positionieren, was die Handhabung der beiden Stecker entscheidend vereinfacht. Mit der Erfindung wird die Montagezeit für die Steckverbindung gegenüber dem Stand der Technik erheblich reduziert. Zur Konfektionierung des erfindungsgemäßen Steckers 20 ist keine Stromversorgung od. dgl. erforderlich. Es genügt, das Coating von der Faser 13 zu entfernen und die Faser zu brechen. Weitere Arbeitsgänge, wie Kleben, Aushärten oder Polieren der Fasern sind nicht erforderlich.

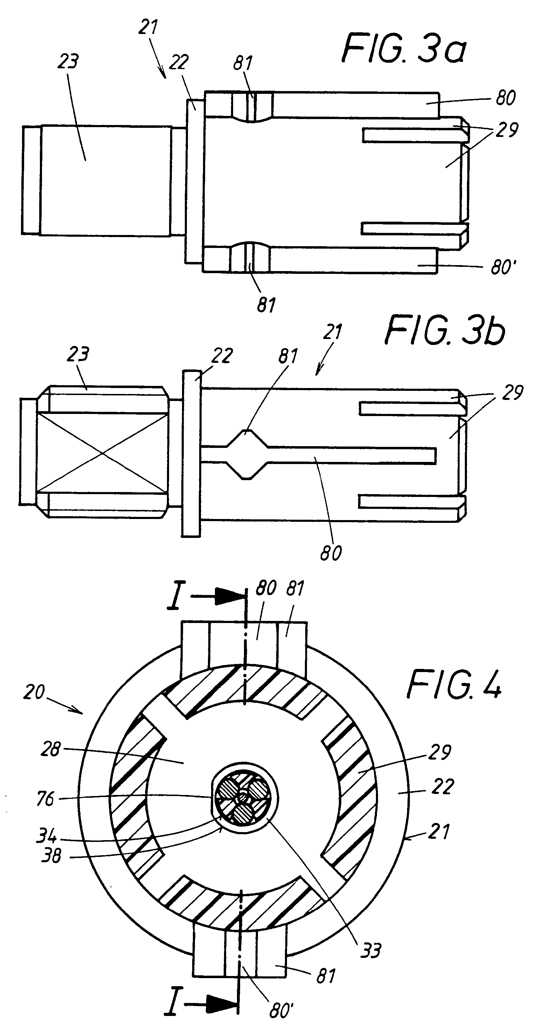

Der Stecker 20 umfaßt, gemäß Fig. 1, ein zylindrisches Steckergehäuse 21 mit einem Flansch 22, hinter welchem ein Außengewinde 23 sitzt. Auf das Außengewinde 23 wird zum Abschluß der Montage eine Mutter 24 eines Anschlußgliedes 25 aufgeschraubt. Das Anschlußglied 25 ist mit einer Axialbohrung 26 zum freien Durchführen der noch mit dem Coating versehenen Faser ausgerüstet und besitzt ein stößelartiges Druckstück 27, das ins Innere des Steckergehäuses 21 hineinragt. Im Steckergehäuse 21 ist ein Innenbund 28 vorgesehen, vor welchem eine geschlitzte Gehäusehülse 29 sich befindet. Die Gehäusehülse 29 ist einstückig mit dem Steckergehäuse 21 ausgebildet, das sie gleichförmig fortsetzt. Durch die vorzugsweise axialen Schlitze entstehen die vier aus Fig. 4 ersichtlichen federnden Hülsenschenkel.

Im Inneren des Steckergehäuses 21 befindet sich eine erfindungsgemäß in besonderer Weise gestaltete Stifthalterung 30. Diese umfaßt zunächst einen im Gehäuseinneren befindlichen zylindrischen Topf 31, dessen Topfboden 32 an der Innenfläche des erwähnten Innenbundes 28 zur Anlage kommt. Der Innenbund 28 ist mit einer zentralen Bundöffnung 38 versehen, aus welcher die Stifthalterung 30 mit einem besonders gestalteten Käfig 34 nach außen hin durchragt und dabei mit einem zylindrischen Hals 33 in die Bundöffnung 38 eingreift. Im Inneren des Topfes 31 befindet sich eine zum Topfboden 32 hin konisch verjüngende Aufnahme 35. Im Topfboden 32 und dem sich daran anschließenden Hals 33 des Käfigs 34 befindet sich ein axialer Durchlaß 36.

Der Käfig 34 dient zur unverlierbaren Halterung von drei Zylinderstiften 40. Diese werden durch die axiale Bohrung 36 ins Innere des Käfigs 34 eingeführt und dort durch Profilstäbe 37 gehalten. Die äußeren Enden der Profilstäbe 37 sind über eine Endscheibe 39 miteinander verbunden, die zur äußeren axialen Begrenzung der eingeführten Zylinderstifte 40 dient. Zur inneren axialen Begrenzung der ins Käfig-Innere eingeführten Zylinderstifte 40 dient die Kopffläche 48 eines konischen Druckrings 49, der Bestandteil des hier zweiteiligen Haltegliedes zum mechanischen Abfangen des Faserendes 14 ist. Der Druckring 49 befindet sich zunächst lose in der konischen Aufnahme 35 der Stifthalterung 30 und ist mit seiner Fußfläche 47 der Öffnung des Topfes 31 zugekehrt.

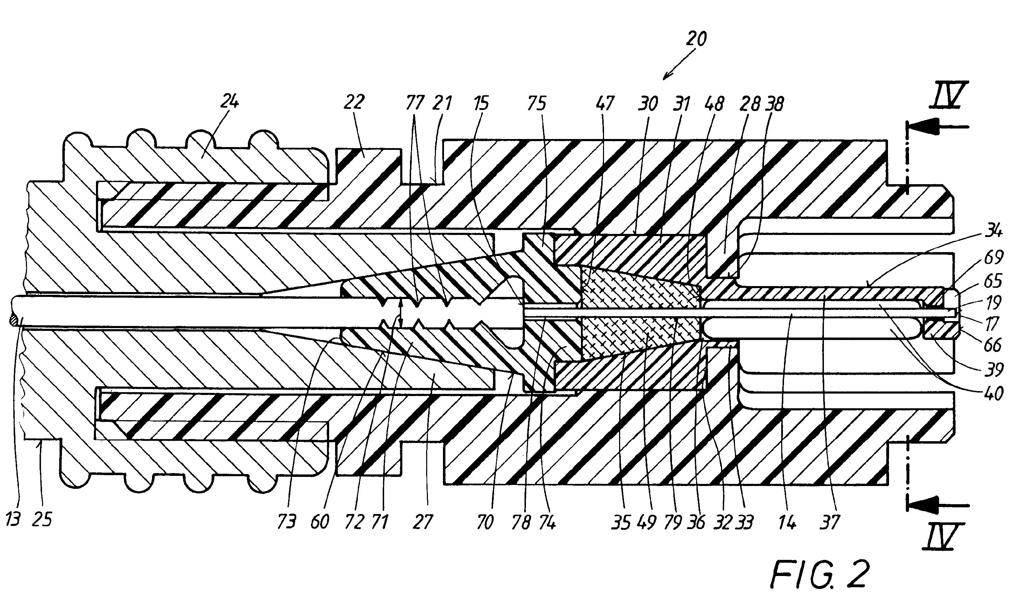

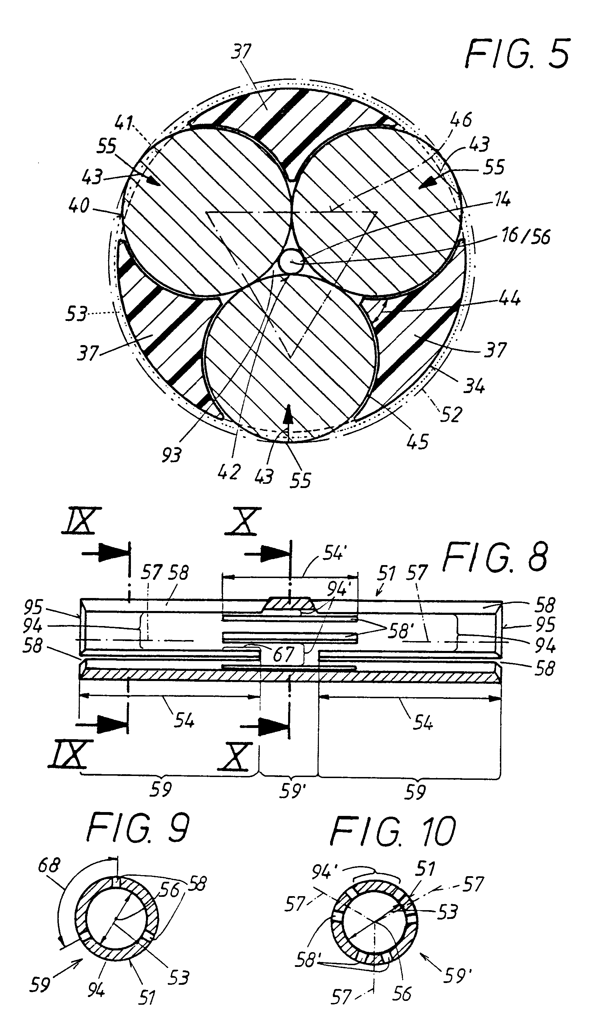

Ausweislich der vergrößerten Querschnittansicht von Fig. 5 liegen die in den Käfig 34 eingeführten Zylinderstifte 40 mit ihrer Stiftmitte in den Eckpunkten eines dort strichpunktiert angedeuteten Dreiecks 46, weshalb zwischen ihnen ein Axialspalt 93 entsteht. Die Zylinderstifte 40 nehmen zwischen sich, im Axialspalt 93, das Faserende 14 auf, das schließlich, gemäß Fig. 2, einen zentralen Durchlaß 69 der erwähnten Käfig-Endscheibe 39 frei durchragt. Die Profilstäbe 37 haben dabei das aus Fig. 5 ersichtliche Profil. Sie füllen zunächst den äußeren Zwickelbereich 44 zwischen den Zylinderstiften 40 bis auf eine kleine Lücke 45 aus, die ein Spiel zu den Zylinderstiften 40 beläßt, so daß diese im Korb 34 "schwimmen". Die Profilstäbe 37 umgreifen zwar nach außen die Zylinderstifte 40, besitzen aber einen in Fig. 5 gestrichelt eingezeichneten Kreisumriß 41, den die Zylinderstifte mit ihren radial nach außen gerichteten Zonen 55 stets überragen.

Zur Kupplung 50 gehört eine noch näher im Zusammenhang mit Fig. 8 bis 10 zu erläuternde radial federnde Buchse 51 aus hier z. B. metallischem Werkstoff. Im Kupplungsfall werden in die Buchse 51 beidseitig jeweils die Käfige 34 der beiden Stecker 20 mit den darin befindlichen Faserenden 14 eingeführt, wie aus Fig. 11 zu entnehmen ist. Vor dem Einführen der beiden Stecker 20 besitzt die Buchse 51 die aus den Querschnittansichten von Fig. 9 und 10 ersichtliche lichte Weite 53, die als punktierter Kreis 53 zur Verdeutlichung in der Querschnittansicht von Fig. 5 mit eingezeichnet ist. Wie daraus ersichtlich, überragen die Zylinderstifte 40 mit ihren radialen Außenseiten 55 diesen ursprünglichen Öffnungskreis 53. Beim Einführen der Stecker 20 kommt es folglich zu einer radialen Ausweitung der Buchse 51 an den Berührungszonen 55 zwischen den drei Zylinderstiften 40 und der Buchse 51, wobei sich in allen Zonen 55 die gleiche Dehnung ergibt. Die sich daraus ergebende wechselseitige Lage der Zylinderstifte 40 ist in Fig. 5 gezeigt. Durch die radialen Berührungsstellen 55 ist in Fig. 5 strichpunktiert zugleich ein Umkreis 52 zu den Zylinderstiften 40 eingezeichnet, und zwar zusammen mit dem Kreis-Mittelpunkt 16. Der Umkreis 52 beschreibt aber zugleich, zumindest an den Berührungsstellen 55, die sich im Kupplungszustand ergebende radial ausgeweitete Öffnung der Buchse 51, denn die Berührungsstellen 55 haben nach dem Einführen der Stecker sich zueinander gleich geweitet. Infolge der elastischen Dehnung des Buchsenmaterials wirken folglich an den Berührungsstellen 55 bei dieser Geometrie exakt radial wirksame, durch Pfeile 43 in Fig. 5 verdeutlichte Spannkräfte 43, die gegen den Kreismittelpunkt 16 genau gerichtet sind. Diese zueinander gleich großen Spannkräfte 43 wirken nun über die aus Fig. 5 ersichtlichen Kontaktstellen 42 auf das Faserende 14 und belasten dieses in zueinander gleicher Weise auf den Kreismittelpunkt 16 des Umkreises 52 zu. Weil der Umkreis 52 aber zugleich den gedehnten Zustand des Buchse 51 beschreibt, befindet sich auch die aus Fig. 9 und 10 angedeutete Buchsen-Mittelachse 56 exakt im Kreismittelpunkt 16 von Fig. 5. Weil dies in analoger Weise mit den Faserenden 14 bei beiden Steckern 20 geschieht, sind diese in der erfindungsgemäßen Steckverbindung exakt miteinander zentriert. Die beidseitigen lichtleitenden Faserkerne sind einwandfrei ausgerichtet.

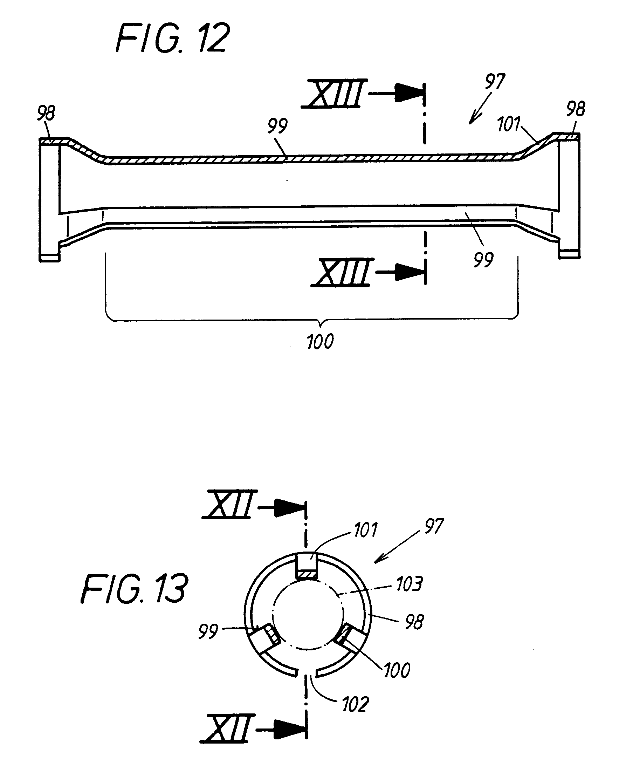

Obwohl die radial dehnbare Buchse 51 aus Kunststoff ausgebildet sein könnte, wird im vorliegenden Fall metallischer Werkstoff zu ihrer Herstellung verwendet, um dessen Formstabilität und Abriebfestigkeit, bei häufigen Steckvorgängen, zu nutzen. In Fig. 8 und 10 ist ein erstes Ausführungsbeispiel für die Ausgestaltung einer solchen Buchse 51 gezeigt, für welche man aber auch alternativ die abschließend noch zu beschreibende Buchse 97 gemäß Fig. 12 und 13 verwenden könnte. In beiden Fällen geht es darum, an der vorerwähnten Berührungsstelle 55 gute Federeigenschaften bei der Buchse 51 bzw. 97 zu erhalten.

Im Falle der Fig. 8 bis 10 ist die Buchse 51 mit Schlitzen 58, 58′ versehen, die axial verlaufen, sich aber jeweils nur über eine Teillänge 54, 54′ erstrecken und entsprechend der Anzahl der Zylinderstifte 40 bzw. einem vielfachen dieser Anzahl vorgesehen sind. Zwischen den Schlitzen 58, 58′ entstehen jeweils Segmente 94, 94′, die in symmetrischer Anordnung zu den vorerwähnten Berührungsstellen 55 im Kupplungsfall liegen. In den beiden endseitigen Abschnitten 59 der Buchse 51 befinden sich Endschlitze 58, die eine gleichförmige Teilung 68 des Buchsenumfangs gemäß Fig. 9 besorgen. Die dabei entstehenden Segmente 94 erstrecken sich somit annähernd über jeweils ein Kreisdrittel. Die Mittellinien 57 dieser Segmente 94 liegen im Kupplungsfall stets in Ausrichtung mit den Berührungsstellen 55 der Zylinderstifte 40. Die beiden Stecker 20 werden in die beiden Buchsenenden 95 in zueinander übereinstimmender Drehposition eingeführt.

Im mittleren Abschnitt 59′ der Buchse 51 befinden sich im vorliegenden Fall sechs Zwischenschlitze 58′, die sich nur über eine Teillänge 54′ axial erstrecken, aber zu einer Überlappung 67 mit den Endschlitzen 58 führen. Die Zwischenschlitze 58′ sind jeweils paarweise in symmetrischer Lage zu den vorerwähnten Mittellinien 57 der endseitigen Segmente 94 angeordnet, und zwar ca. jeweils um 20° demgegenüber versetzt. Zwischen ihnen entstehen schlitzfreie Segmente 94′, die in Ausrichtung mit den Berührungsstellen 55 der Zylinderstifte 40 sind. An der Berührungsstelle 55 steht somit kein Grat, der den gleichförmigen Andruck der Zylinderstifte 40 beeinträchtigen könnte. Dieser Aufbau der Buchse 51 gewährleistet eine gute radiale Elastizität in sämtlichen Längenabschnitten, vor allen Dingen aber an den Buchsenendbereichen 59 und einen gleichförmigen Andruck 43. Zwischen den Zylinderstiften 40 und den sie im Zwickelbereich umgreifenden Käfig-Profilstäben 37 bleiben dabei die erwähnten Lücken 45 gemäß Fig. 5.

Wie aus Fig. 2 hervorgeht, sind die auf der Außenseite der Käfig-Endscheibe 39 herausragenden Faserendstücke 19 jeweils von einem Kragen 66 umschlossen. Der Kragen 66 ist dabei mit einer einseitigen Radialöffnung 65 als Durchlaßöffnung für ein dementsprechend gestaltetes Ritzwerkzeug, zum Ritzen und Brechen des Glasfaserendes 14, versehen. Der Kragen 66 kann dabei als Anschlag zur Schnittführung beim Durchtrennen des Faserendes dienen. Dazu wird das Faserende geritzt und dann gebrochen. Die Stirnfläche 17 bleibt dabei definiert gegenüber der äußeren Kragenkante axial zurückgesetzt und braucht nicht weiter bearbeitet, wie z. B. poliert, zu werden. Die empfindliche Stirnfläche 17 ist durch den Kragen 66 geschützt. Die Montage der Faser 13 im Stecker 20 wird dabei in folgender Weise ausgeführt.

Wie aus Fig. 1 hervorgeht, werden die aus dem Schutzmantel 11 herausragenden Teile des Zugentlastungsgeflechts 12 um einen Rohrstutzen 64 herumgelegt, der hier einstückig mit dem Anschlußglied 25 des Steckers 20 ausgebildet ist. Der Rohrstutzen 64 hat ein Sägezahnprofil 63, was zu einer Verkrallung des Geflechts 12 führt. Das Geflecht ist z. B. um einen äußeren und inneren Metallring 62, 62′ herumgelegt. Darüber ist ein Schrumpfschlauch 61 aufgebracht, der durch die Schrumpfkraft das Geflecht 12 gegen die Zahnungen 63 festdrückt. Dies geschieht in der Endmontage des Steckers 20, die vorausgehend noch folgende Arbeitsphasen durchläuft.

In dem Käfig 34 der Stifthalterung 30 können die Zylinderstifte 40 bereits eingeführt und dort durch den erwähnten Druckring 49 gesichert sein. Dieser bildet zusammen mit einer nachgeschalteten Klemme 70 ein hier zweiteiliges Halteglied, das aber alternativ auch einstückig ausgebildet sein könnte. Die Klemme 70 umfaßt eine Kegelhülse 71 mit einem zum Druckring entgegengerichteten Kegelverlauf; ihre Kegelspitze 73 ist vom freien Ende des Steckers 20 weggerichtet. Die Kegelhülse 71 kann gegenüber dem Druckring 49 einen kleineren Scheitelwinkel aufweisen. Im vormontierten Zustand befindet sich zunächst die Stifthalterung 30 mit den Zylinderstiften 40 und dem dahinter angeordneten zweiteiligen Halteglied 49, 70 im Inneren des Steckergehäuses 21. Die Klemme 70 dieses Halteglieds besitzt einen Anschlagbund 75 und ist mit einem Stoßglied 74 versehen, das in die erwähnte konische Aufnahme 35 der Stifthalterung 30 hineinragt.

Diese lose Ineinanderlage der Bauteile wird schließlich durch ein leichtes Aufschrauben des Anschlußglieds 25 auf das Steckergehäuse 21 gesichert, weil dessen bereits erwähntes Druckstück 27 mit einer Kegelaufnahme 60 die Kegelhülse 71 umgreift. Nachdem das Faserende 14 vom Coating befreit worden ist, wird die Faser 13 in den so vormontierten Stecker 20 frei hindurchgefädelt, denn das Stoßglied 74 der Klemme 70 ist mit einem zentralen Durchbruch 78 versehen, wie auch der nachfolgende Druckring 49 mit einer axialen Bohrung 79 versehen ist. Durch den Durchbruch 78 und die axiale Bohrung 79 paßt aber nur das coating-freie Faserende 14 hindurch, während die oben erwähnte Schulter 15 zur Faser 13 hin an einer Innenfläche der Kegelhülse 71 anstößt. Damit ist die Einführtiefe der Faser 13 bestimmt. Das schlanke Faserende 14 ist dabei durch die lose im Käfig 34 sitzenden Zylinderstifte 40 hindurchgeführt worden und ragt jenseits des erwähnten Kragens 66 heraus. Die zum Anschlußglied 25 gehörende Mutter 24 wird auf das Außengewinde 23 des Steckergehäuses 21 fest aufgeschraubt. Dadurch dringt das Druckstück 27 dieses Anschlußgliedes 25 axial vor und preßt mit seiner Kegelaufnahme 60 die durch ihren Axialschlitz 72 voneinander getrennten Hälften der Kegelhülse 71 gegeneinander, wodurch sich zunehmend die randseitig dort vorgesehenen Sperrzahnungen 77 in dem sekundären bzw. primären Coating der Faser 13 allmählich festsetzen, ohne die Faser zu beschädigen. Gleichzeitig dringt das an der Kegelhülse 71 befindliche Stoßglied 74 axial gegen den konischen Druckring 49 vor. Dieser kann aus elastisch zusammendrückbarem Material, nämlich weichem Kunststoff bestehen. Das Stoßglied 74 drückt auf die breite Fußfläche 47 des konischen Druckrings 49. Weil die Stifthalterung 30 am Innenbund 28 des Steckergehäuses 21 anliegt, kann der Käfig 34 nicht weiter axial im Steckergehäuse 21 bewegt werden. Dadurch wird der Druckring 49 über das Stoßglied 74 im Topfinneren zusammengepreßt, wodurch eine mechanische Abfangung des Faserendes 14 entsteht. Der elastische Druckring 49 wird zusammengepreßt unter Verengung seiner Axialbohrung 79, die sich am Außenumfang des empfindlichen, weil vom Coating befreiten Faserendes 14 anpreßt. Das Ausmaß dieser Zusammenpressung ist genau dosiert, weil das Stoßglied 74 der vorgeschalteten Klemme 70 nur bis zum Anschlagbund 75 der Klemme 70 ins Topfinnere gelangen kann.

Im vorliegenden Fall besteht die Klemme 70, gegenüber dem leicht zusammendrückbaren Material des Druckrings 49, aus demgegenüber zwar formfesterem, aber ebenfalls elastischem Kunststoff. Das Festpressen der Kegelhülse 71 wird durch den am Steckergehäuse 21 angeformten Flansch 22 begrenzt; die Mutter 24 läßt sich nämlich nur bis zum Anschlag mit diesem Flansch 22 auf das Außengewinde 23 aufschrauben. Danach kann in der bereits oben angegebenen Weise das ganze Lichtwellen-Leiter-Kabel 10 seine Endbefestigung am Stecker 20 erfahren.

Jetzt, da die Faser in axialer Richtung fixiert ist, kann das bereits oben erwähnte Kerben und Brechen der Faser erfolgen, wodurch in der beschriebenen Weise die Stirnfläche 17 am Faserendstück 19 gemäß Fig. 2 entsteht. Die radiale Zentrierung der Faser erfolgt dann erst in der beschriebenen Weise, durch Stecken der Stecker 20 in die Buchse 51 der Kupplung 50, 50′.

Für eine verdrehungssichere Position der verschiedenen Bestandteile des Steckers 20 sind diverse Anschlag- und Führungsflächen vorgesehen. Um im Kupplungszustand die oben erwähnte drehgesicherte Position der Zylinderstifte 40 bezüglich der Kupplungsbuchse 51 zu erhalten, ist zwischen dem Hals 33, der Stifthalterung 30 und der zentralen Bundöffnung 38 des Steckergehäuses 21 eine aus Fig. 4 ersichtliche Verdrehsicherung 76 vorgesehen. Das Steckergehäuse 21 einerseits und die Kupplung 50 andererseits besitzen zur Festlegung ihrer Winkellage zusammenwirkende Führungsmittel. Dazu ist, gemäß Fig. 3 a und 3 b das Steckergehäuse 21 hier mit zueinander diametral angeordneten, radial vorspringenden Führungsrippen 80, 80′ versehen, die, wie Fig. 4 verdeutlicht, eine zueinander unterschiedliche Rippenbreite aufweisen, um einen Verdrehungsschutz zu gewährleisten. Die Rippen 80, 80′ verlaufen in Axialebenen und besitzen an ihrem inneren Ende Rastvorsprünge 81. Dazu hat die Kupplung 50 komplementäre Rastaussparungen 91, wie aus Fig. 6 zu entnehmen ist.

Im Ausführungsbeispiel von Fig. 6 besteht die Kupplung 50 aus zwei aneinander montierbaren Gehäusehälften 82, die endseitig mit Flanschen 83 versehen sind. Die Flansche 83 liegen im Montagefall aneinander und werden durch Niete 84 od. dgl. zusammengehalten. Die beiden Gehäusehälften 82 umfassen ferner über radiale Stege od. dgl. eine angeformte, koaxial zu ihnen liegende Innenhülse 85, in welcher drehgesichert die Buchse 51 positioniert ist. Die Verdrehungssicherung der Hülse 51 in den Gehäusehälften 82 kann beispielsweise durch eine angeformte Nase 92 an der Innenhülse 85 zustande kommen, die in eine entsprechende Aussparung der Buchse 51 eingreift. Die beiden zueinander spiegelbildlich gleich gestalteten Gehäusehälften 82 besitzen radiale Führungsschlitze 86, worin sich die erwähnten Rastaussparungen 91 befinden. Die Stecker 20 können nur in einer bestimmten Drehposition in die Kupplung 50 eingeführt werden, weil die breite Führungsrippe 80 in den entsprechend weit dimensionierten Führungsschlitz 86 der Kupplung 50 nur einfahren kann. Die Kupplungstiefe der Stecker 20 ist dabei durch die Länge der Führungseinschnitte 86 festgelegt. In diesem Fall schnappen die Rastvorsprünge 81 schließlich auch in die Rastaussparung 91 ein und sichern damit die Eingriffslage der Stecker 20 in der Kupplung 50. Im übrigen besitzt die Kupplung 50 auch noch aus Fig. 6 ersichtliche axiale Aussparungen 87, die profilgemäß den bereits in Fig. 4 beschriebenen geschlitzen Gehäusehülsen 29 angepaßt sind. Zum Lösen der Verbindung brauchen die Stecker 20 lediglich axial voneinander wegbewegt werden, bis durch ausreichende elastische Verformungen die ineinandergreifenden Rastteile 81, 91 sich lösen. Die Stecker 20 können immer wieder neu miteinander über die Kupplung 50 verbunden werden. Der Kupplungsendzustand wird durch den Eingriff der Rastteile 81, 91 gesichert. Fehlbedienungen sind ausgeschlossen.

Die Fig. 7 zeigt eine alternative Ausbildung eines Kupplungsglieds 50′, wo ebenfalls zwei zueinander spiegelbildlich gleiche Kupplungshälften 88 verwendet werden können. In diesem Ausführungsbeispiel ist die Buchse 51 mit einem Umfangsflansch 96 mit Drehanschlägen od. dgl. versehen, der ebenfalls für eine verdrehungssichere Verbindung sorgt. Die beiden Gehäusehälften 88 sind hier mit endseitigen Tellern 89 versehen, die entsprechende Aussparungen zur Aufnahme des Umfangsflansches 96 der zuzgehörigen Buchse 51 aufweisen. Im Öffnungsbereich sind die beiden Gehäusehälften 88 mit andersartigen Rasthalterungen 90 versehen, die hier aus radial nach innen gerichteten Vorsprüngen bestehen. An den zugehörigen, hier nicht näher gezeigten Steckern sind komplementäre Kupplungsaufnahmen vorgesehen.

Für die Stifthalterung 30, zu welcher auch der beschriebene Käfig 34 gehört, wird zweckmäßigerweise ein Kunststoff verwendet, der im wesentlichen den gleichen thermischen Ausdehnungskoeffizienten wie das lichtleitende Material des Faserendes 14 besitzt. Anstelle der vorbeschriebenen drei Zylinderstifte 40 könnte man einen Käfig 39 mit einer anderen Anzahl von Zylinderstiften verwenden, z. B. vier Exemplare. Es versteht sich dann, daß der zugehörige Korb 34 vier Profilstäbe 37 in analoger Weise aufweisen würde. Die Querschnitte der Profilstäbe 37 könnten auch andere Profilformen aufweisen. Im Montagezustand liegen die Zylinderstifte 40 einerends am Druckring 49 und anderends an der Endscheibe 39 an. Im Kupplungsfall der beiden Stecker 20 ergibt sich der definierte Abstand 18 zwischen ihren Stirnflächen 17 dadurch, daß sich die beiden Kragen 66 der Stecker 20 stirnseitig berühren.

Wie bereits erwähnt wurde, kann das Halteglied mit seinen Bestandteilen 49, 70 auch einstückig ausgebildet sein. In diesem Fall sollte der beschriebene konische Druckring 49 als längsgeschlitze Hülse ausgebildet sein, die aber, im Gegensatz zur Klemme 70, keine Sperrzahnung 77 besitzt.

In den Fig. 12 und 13 ist eine alternative Ausführung einer Buchse 97 zu der im Ausführungsbeispiel erwähnten Buchse 51 in Fig. 8 bis 10 dargestellt. Diese Buchse 97 umfaßt an ihren Stirnenden zwei Ringe 98, die durch Stege 99 miteinander verbunden sind. Diese Stege 99 verlaufen in Axialebenen, sind aber radial, zur Buchsenachse hin, verkröpft. Im vorliegenden Fall handelt es sich um drei Stege 99, die hinsichtlich ihrer Kröpfung zueinander gleich ausgebildet sind, und zwar zueinander spiegelbildlich geneigt nach innen verlaufende Schenkel 101 und ein achsparallel verlaufendes Stegmittelstück 100 umfassen. Diese Buchse 97 wird durch Stanzen und Formen aus einem Blechabschnitt erzeugt, weshalb die beiden Ringe 98 nach ihrer Biegung einen Schlitz 102 aufweisen. Dieser Schlitz 102 oder zusätzliche Laschen an den Ringen 98 sorgen für eine definierte Drehausrichtung der Buchse 97 mit ihren Stegen 99 in der fertigen Steckverbindung. Dadurch kommen die drei zueinander um 120° gegeneinander versetzt angeordneten Stege 99 mit ihren geradlinigen, achsparallel verlaufenden Stegmittelstücken 100 im Kupplungsfall in Ausrichtung mit den bereits mehrfach erwähnten Berührungszonen 55 der drei Zylinderstifte 40 gemäß Fig. 5. Es kommt zu elastischen Verformungen im Bereich der geneigten Stegschenkel 101, welche die in Fig. 5 bereits beschriebene radiale gleichmäßige Spannkraft 43 von allen drei Seiten aus erzeugen. Wie aus Fig. 13 erkennbar, schließen die Innenflächen der drei Stegmittelstücke 100 eine Kreisöffnung 103 ein, welche der gepunktet in Fig. 5 verdeutlich ten lichten Öffnungsweite 53 entspricht.

## Patentansprüche

1. Lösbare Steckverbindung zum paarweisen Koppeln der coating-freien Faserenden (14) von zwei Lichtwellen-Leitern (10), mit zwei zueinander spiegelbildlich, insbesondere gleich, gestalteten Steckern (20) zum Haltern jeweils eines der Faserenden, von denen jeder ein durch eine gemeinsame Kupplung (50) verbundenes Stecker gehäuse aufweist, und mit jeweils
drei parallelen Zylinderstiften (40) gleichen Durchmessers für jeden Stecker die sich in einer Stifthalterung (30) des Steckergehäuses (21) befinden, und zwar - bei Querschnittansicht - in einer Dreieck-Anordnung (46) zueinander, und die in dem zwischen ihnen entstehenden Axialspalt (93) das Faserende (14) führen, so daß
im Kupplungsfall die Zylinderstifte (40) von einer elastischen Buchse (51) der Kupplung (50) umschlossen sind,
**dadurch gekennzeichnet,**
daß die Stifthalterung (30) einen die Zylinderstifte (40) im Entkupplungsfall zwar radial schwimmend beweglich, aber unverlierbar halternden Käfig (34) aufweist, bestehend aus achsparallelen, querschnittmäßig jeweils im äußeren Zwickelbereich (44) der Zylinderstifte (40) angeordneten Profilstäben (37) und aus einer diese verbindenden, zur axialen Begrenzung der Zylinderstifte (40) dienenden Endscheibe (39) mit einem zentralen Durchlaß (69) zum freien Hindurchführen des Faserendes (14),
wobei die radialen Außenflächen (55) der Zylinderstifte (40) zwischen den Profilstäben (37) aus dem Käfig (34) frei herausragen und - in Querschnittansicht - einen im Kupplungsfall wirksamen Umkreis (52) bestimmen, der gegenüber der lichten Öffnungsweite (53) der ungekuppelten Buchse (51) der Kupplung (50) größer ausgebildet ist,
und daß die Buchse (51) an allen im Kupplungsfall die freien Außenflächen (55) der Zylinderstifte (40) berührenden Stellen mit zueinander gleicher Spannkraft (43) radial dehnbar bezüglich ihrer Buchsen-Mittelachse (56) ist, wodurch die Zylinderstifte (40) das Faserende (14) exakt im Mittelpunkt (16) ihres Umkreises (52) und damit in der Buchsen-Mittelachse (56) zentrieren.

2. Steckverbindung nach Anspruch 1, dadurch gekennzeichnet, daß die insbesondere metallische Buchse (51) in einem axialen Abschnitt (59, 59′) mehrere, vorzugsweise drei oder sechs, sich jeweils nur über eine Teillänge (54, 54′) der Buchse (51) erstreckenden radialen Schlitze (58, 58′) aufweist, und zwar in einer zueinander gleichförmigen Teilung (68) des Buchsenumfangs,
wobei die Stecker (20) insbesondere in zueinander übereinstimmender Drehlage in die beiden Enden (95) der Buchse (51) einführbar sind.

3. Steckverbindung nach Anspruch 1 oder 2, dadurch gekennzeichnet, daß in den beiden endseitigen Abschnitten (59) der Buchse (51) die jeweils zwischen zwei Endschlitzen (58) liegenden endseitigen Segmente (94) des Buchsenmantels, vorzugsweise ihre Segmentmittellinien (57), im Kupplungsfall stets die Berührenden Stellen (55) für die jeweiligen Zylinderstifte (40) der beiden Stecker (20) bilden,
daß die Buchse (51) in einem mittleren Abschnitt (59′) eine Gruppe von vorzugsweise drei oder sechs Zwischenschlitzen (58′) in ebenfalls zueinander gleichförmiger Teilung (68) des Buchsenumfangs aufweist, die gegenüber den Endschlitzen (58) drehversetzt angeordnet sind, und zwar insbesondere symmetrisch zur Segmentmittellinie (57) der jeweiligen endseitigen Buchsenabschnitte (59) liegen,
und daß die Zwischenschlitze (58′) in axialer Überlappung (67) zu den Endschlitzen (58) verlaufen.

4. Steckverbindung nach Anspruch 1, dadurch gekennzeichnet, daß die insbesondere metallische Buchse (97) aus wenigstens zwei stirnendigen, in axialem Abstand zueinander angeordneten Ringen (98) besteht, die durch vorzugsweise drei Stege (99) miteinander verbunden sind,
und die Stege (99) im Montagefall mit den Berührenden Stellen (55) der Zylinderstifte (40) ausgerichtet sind.

5. Steckverbindung nach Anspruch 4, dadurch gekennzeichnet, daß die Stege (99) symmetrisch radial nach innen verkröpft sind und mit ihren vorzugsweise achsparallelen, geradlinigen Stegmittelstücken (100) zwischen sich eine lichte Kreisöffnung (103) bestimmen, die kleiner als der Umkreis (52) der Zylinderstifte (40) ausgebildet ist.

6. Steckverbindung nach einem oder mehreren der Ansprüche 1 bis 5, dadurch gekennzeichnet, daß die insbesondere zueinander gleichgestalteten Profilstäbe (37) des Käfigs (34) - in Querschnittansicht -einen gegenüber der lichten Öffnungsweite (53) der Buchse (51) geringeren Kreisumriß (41) aufweisen und - bis auf ein seitliches Spiel (45) - jeweils den äußeren Zwickelbereich (44) zwischen benachbarten Zylinderstiften (40) ausfüllen.

7. Steckverbindung nach einem oder mehreren der Ansprüche 1 bis 6, dadurch gekennzeichnet, daß die Endscheibe (39) des Käfigs (34) auf ihrer Außenfläche einen vorzugsweise bereichsweise radial offenen (65) Kragen (66) trägt, welcher zur Schnittführung beim Durchtrennen des eingeführten Faserendes (14) dient und das verbleibende, aus ihrem axialen Durchbruch (69) herausragende Faser-Endstück (14) schützend umgibt.

8. Steckverbindung nach einem oder mehreren der Ansprüche 1 bis 7, dadurch gekennzeichnet, daß die Einführtiefe der beiden Stecker (20) in der Buchse (51) durch die stirnseitige Berührung ihrer beiden Käfige (34) in der Buchsenmitte bestimmt ist, wobei die Stirnflächen (17) der beiden Faserenden (14) in einem definierten Axialabstand (18) zueinander liegen.

9. Steckverbindung nach einem oder mehreren der Ansprüche 1 bis 8, dadurch gekennzeichnet, daß die Stifthalterung (30) und ihr insbesondere einstückiger Käfig (34) aus einem Kunststoff bestehen, der im wesentlichen den gleichen thermischen Ausdehnungs-Koeffizienten wie die Faser (14) des Lichtwellen-Leiters (13) aufweist.

10. Steckverbindung nach einem oder mehreren der Ansprüche 1 bis 9, dadurch gekennzeichnet, daß der Käfig (34) der Stifthalterung (30) in radialem Abstand von einer insbesondere geschlitzten, vorzugsweise mit dem Steckergehäuse (21) einstückigen Gehäusehülse (29) umgeben ist, die, im Kupplungsfall, in eine komplementäre axiale Aufnahme (87) der Kupplung (50) eingreift.

11. Steckverbindung nach einem oder mehreren der Ansprüche 1 bis 10, dadurch gekennzeichnet, daß die Stifthalterung (30) mit Käfig (34), die beiden Steckergehäuse (21) und die Kupplung (50) durch axiale und/oder radiale Anschlag- sowie Führungsflächen (80; 80′; 86; 76) verdrehungsgesichert ineinanderfügbar sind und durch Rasthalterungen (81, 91) oder Verriegelung zueinander axialgesichert montierbar bzw. nach dem Kuppeln aneinander axialgesichert sind,
wobei das Steckergehäuse (21) axiale Führungsrippen (80, 80′) mit Rastvorsprüngen (81) trägt und die Kupplung (50) an ihrer axialen Aufnahme (87) Führungseinschnitte (86) mit Rastaussparungen (91) aufweist.

12. Steckverbindung nach einem oder mehreren der Ansprüche 1 bis 11, dadurch gekennzeichnet, daß die Stifthalterung (30) ein elastisch nachgiebiges Halteglied zum mechanischen Abfangen des Lichtwellen-Leiters (13) aufweist.

13. Steckverbindung nach Anspruch 12, dadurch gekennzeichnet, daß das Halteglied aus einer Klemme (70) zum mechanischen Abfangen des mit dem Coating ausgerüsteten Lichtwellen-Leiters (13) besteht.

14. Steckverbindung nach Anspruch 12 oder 13, dadurch gekennzeichnet, daß das Halteglied aus einem konischen Druckring (49) mit axialer Bohrung (79) zum Durchfädeln des Faserendes (14) besteht und daß die Stifthalterung (30) eine zum Käfig (34) hin sich verjüngende, konische Aufnahme (35) für den Druckring (49) besitzt.

15. Steckverbindung nach Anspruch 13 oder 14, dadurch gekennzeichnet, daß die Klemme (70) eine axialgeschlitzte (72), zum freien Faserende (14) hin sich erweiternde Kegelhülse (71) aufweist und dieser ein Druckstück (27) mit einer komplementären Kegelfläche (60) im Inneren des Steckergehäuses (21) zugeordnet ist, wobei die Kegelhülse (71) im Bereich ihres bzw. ihrer Axialschlitze (72) mit Sperrzahnungen (77) versehen ist.

16. Steckverbindung nach einem oder mehreren der Ansprüche 13 bis 15, dadurch gekennzeichnet, daß die Klemme (70) ein vorzugsweise damit einstückiges Stoßglied (74) aufweist, das im Montagefall in die Stifthalterung (30) eindringt und auf den Druckring (49) einwirkt, und die Klemme (70) einen die Eindringtiefe des Stoßglieds (74) in die Stifthalterung (30) begrenzenden Anschlag, wie einen Anschlagbund (75) aufweist.

17. Steckverbindung nach einem oder mehreren der Ansprüche 13 bis 14, dadurch gekennzeichnet, daß das Halteglied einstückig ausgebildet ist, bestehend aus einer Klemme (70) und aus einer daran angeformten Schlitzhülse mit einer zur Klemme (70) gegensinnigen Konizität.

18. Steckverbindung nach einem oder mehreren der Ansprüche 1 bis 17, dadurch gekennzeichnet, daß das Druckstück (27) aus einem vorzugsweise einstückigen Stößel an einem insbesondere als Mutter (24) ausgebildeten Schraubglied besteht und das Schraubglied (24), im Montagefall, auf einem am Steckergehäuse (21) vorgesehenen Komplementärgewinde (23) festschraubbar ist sowie vorzugsweise das Schraubglied (24) zugleich mit Anschlüssen (64) für eine Zugentlastung des LWL-Kabels (10) versehen ist.

19. Steckverbindung nach einem oder mehreren der Ansprüche 1 bis 18, dadurch gekennzeichnet, daß die Kupplung (50, 50′) aus aneinander montierbaren Gehäuseteilen (82; 88) besteht, die jeweils in ihrer Montagemitte die Buchse (51) halten und, diese Buchse (51) umschließend, die Aufnahmen (87) für die beiden Steckergehäuse (21) aufweisen.

20. Steckverbindung nach Anspruch 19, dadurch gekennzeichnet, daß die Buchse (51) in einer insbesondere einstückig mit der Gehäusehälfte (82) ausgebildeten Innenhülse (85) verdrehungssicher (92) sitzt.

21. Steckverbindung nach Anspruch 19, dadurch gekennzeichnet, daß die Buchse (51) einen vorzugsweise in ihrer Längsmitte angeordneten Umfangsflansch (96) trägt, der bei der Montage zwischen zwei Tellern (89) der zur Kupplung (50′) gehörenden Gehäuseteile (88) verdrehungssicher festgespannt ist, und der insbesondere mehrfach unterteilt ist.

## Claims

1. A releasable plug connection for coupling in pairs of the coating-free fibre ends (14) of two light wave conductors (10), ccmprising two plugs (20) which are of mirror image and in particular identical configuration relative to each other, for holding respective ones of the fibre ends, each thereof having a plug housing which is connected by a common coupling (50), and each comprising three parallel cylindrical pins (40) of the same diameter, for each plug, which are disposed in a pin holder (30) of the plug housing (21) and more specifically in a triangular arrangement (46) relative to each other in a cross-sectional view, and which guide the fibre end (14) in the axial gap (93) provided between them, so that in the coupling situation the cylindrical pins (40) are enclosed by an elastic sleeve (51) of the coupling (50), characterised in that the pin holder (30) has a cage (34) which in the uncoupling situation holds the cylindrical pins (40) in radially floatingly movable but non-losable condition, comprising profile bars (37) rich are in parallel relationship to the axis and which in cross-section are each arranged in the respective outer wedge-shaped region (44) of the cylindrical pins (40) and an end disc (39) which connects the profile bars (37) and rich serves for axially restricting the cylindrical pins (40), having a central opening (69) for the fibre end (14) to pass freely therethrough,
wherein the radial outside surfaces (55) of the cylindrical pins (40) project freely out of the cage (34) between the profile bars (37) and -in a cross-sectional view - define a periphery (52) which is effective in the coupling situation and which is larger than the internal width of opening (53) of the uncoupled sleeve (51) of the coupling (50), and that the sleeve (51) is radially expansible relative to its centre line (56) at all locations which in the coupling situation are in contact with the free outside surfaces (55) of the cylindrical pins (40), with clamping forces (43) which are the same as each other, whereby the cylindrical pins (40) exactly centre the fibre end (14) at the centre point (16) of its periphery (52) and thus at the centre line (56) of the sleeve.

2. A plug connection according to claim 1 characterised in that the in particular metal sleeve (51) has a plurality of and preferably three or six radial slots (58, 58′) which each extend only over a part of the length (54, 54′) of the sleeve (51), more specifically at a uniform pitch (68) relative to each other around the periphery of the sleeve, in an axial portion (59, 59′)
wherein the plugs (20) can be introduced into the two ends (95) of the sleeve (51), in particular in mutually identical rotational positions.

3. A plug connection according to claim 1 or claim 2 characterised in that in the two end portions (59) of the sleeve (51) the end segments (94) of the peripheral portion of the sleeve, which each lie between two end slots (58), and preferably their segment centre lines (57), always form in the coupling situation the contact locations (55) for the respective cylindrical pins (40) of the two plugs (20),
that the sleeve (51) has in a middle portion (59′) a group of preferably three or six intermediate slots (58′) also disposed in mutually identical pitch (68) around the periphery of the sleeve, which are arranged in rotationally displaced relationship relative to the end slots (58) and which are disposed in particular symmetrically relative to the segment centre line (57) of the respective end sleeve portions (59), and
that the intermediate slots (58′) extend in axially overlapping relationship (67) with the end slots (58).

4. A plug connection according to claim 1 characterised in that the in particular metal sleeve (97) comprises at least two end rings (98) which are disposed at an axial spacing relative to each other and which are connected together by preferably three limb portions (99), and
in the assembly situation the limb portions (90) are aligned with the contact locations (55) of the cylindrical pins (40).

5. A plug connection according to claim 4 characterised in that the limb portions (99) are symmetrically radially indwardly cranked and with their rectilinear central portions (100) which are preferably parallel to the axis define between them a clear circular opening (103) which is smaller than the periphery (52) of the cylindrical pins (40).

6. A plug connection according to one or more of claims 1 to 5 characterised in that the profile bars (37) of the cage (34), which in particular are of the same configuration as each other, have in cross-sectional view a circular contour (41) which is smaller than the internal width of opening (53) of the sleeve (51) and - except for a lateral clearance (45) - respectively fill the outer wedge-shaped region (44) between adjacent cylindrical pins (40).

7. A plug connection according to one or more of claims 1 to 6 characterised in that the end disc (39) of the cage (34) carries on its outside surface a collar (66) which is preferably radially open in a region-wise manner (65) and which serves for guidance of a cut when severing the inserted fibre end (14) and which protectively surrounds the remaining fibre end portion (14) which projects out of its axial opening (69).

8. A plug connection according to one or more of claims 1 to 7 characterised in that the depth of insertion of the two plugs (20) into the sleeve (51) is determined by the end contact of their two cages (34) at the middle of the sleeve, the end faces (17) of the two fibre ends (14) being at a defined axial spacing (18) relative to each other.

9. A plug connection according to one or more of claims 1 to 8 characterised in that the pin holder (30) and its in particular integral cage (34) comprise a plastics material which has substantially the same coefficient of thermal expansion as the fibre (14) of the light wave conductor (13).

10. A plug connection according to one or more of claims 1 to 9 characterised in that the cage (34) of the pin holder (30) is surrounded at a radial spacing by an in particular slotted housing sleeve portion (29) which is preferably integral with the plug housing (21) and rich in the coupling situation engages into a complementary axial receiving means (87) of the coupling (50).

11. A plug connection according to one or more of claims 1 to 10 characterised in that the pin holder (30) with cage (34), the two plug housings (21) and the coupling (50) can be inserted one into the other in such a way that they are prevented from rotating by means of axial and/or radial abutment and guide surfaces (80; 80′; 86; 76) and by virtue of retaining holding means (81, 91) or locking means can be assembled in axially secured relationship with each other and are axially secured to each other after coupling,
wherein the plug housing (21) bears axial guide ribs (80, 80′) with retaining projections (81) and at its axial receiving means (87) the coupling (50) has guide slots (86) with retaining recesses (91).

12. A plug connection according to one or more of claims 1 to 11 characterised in that the pin holder (30) has a resiliently yielding holding member for mechanically catching the light wave conductor (13).

13. A plug connection according to claim 12 characterised in that the holding member comprises a clamp (70) for mechanically catching the light wave conductor (13) which is provided with a coating.

14. A plug connection according to claim 12 or claim 13 characterised in that the holding member comprises a conical pressure ring (49) with axial bore (79) for passing the fibre end (14) therethrough and that the pin holder (30) has a conical receiving means (35) for the pressure ring (49), said receiving means (35) tapering towards the cage (34).

15. A plug connection according to claim 13 or claim 14 characterised in that the clamp (70) has an axially slotted (72) cone sleeve portion (71) which enlarges towards the free fibre end (14) and associated with the cone sleeve portion is a pressure portion (27) with a complementary cone surface (60) in the interior of the plug housing (21), the cone sleeve portion (71) being provided with locking teeth (77) in the region of its axial slot or slots (72).

16. A plug connection according to one or more of claims 13 to 15 characterised in that the clamp (70) has a thrust member (74) which is preferably integral therewith and which in the assembly condition penetrates into the pin holder (30) and acts on the pressure ring (49) and the clamp (70) has an abutment such as an abutment shoulder (75) which delimits the depth of penetration of the thrust member (74) into the pin holder (30).

17. A plug connection according to one or more of claims 13 to 14 characterised in that the holding member is of an integral configuration comprising a clamp (70) and a slotted sleeve portion formed thereon, with a conicity which is opposite to the clamp (70).

18. A plug connection according to one or more of claims 1 to 17 characterised in that the pressure portion (27) comprises a preferably integral thrust portion on a screw member which in particular is in the form of a nut (24) and the screw member (24), in the assembly condition, can be tightened on a complementary screwthread (23) on the plug housing (21), and preferably the screw member (24) is also provided with connections (64) for relieving a pulling load on the light wave conductor cable (10) .

19. A plug connection according to one or more of claims 1 to 18 characterised in that the coupling (50, 50′) comprises housing portions (82; 88) which can be assembled to each other and which each hold the sleeve (51) at their assembly centre and, surrounding said sleeve (51), have the receiving means (87) for the two plug housings (21).

20. A plug connection according to claim 19 characterised in that the sleeve (51) is non-rotatably (92) carried in an inner sleeve portion (85) which in similar is formed integrally with the housing half (82).

21. A plug connection according to claim 19 characterised in that the sleeve (51) has a peripheral flange (96) which is preferably arranged at its longitudinal centre and rich upon assembly is non-rotatably clamped fast between two plates (89) of the housing portions (88) belonging to the coupling (50′) and which in particular is divided a plurality of times.

## Revendications

1. Dispositif de connexion démontable, servant à accoupler par paire les extrémités dénudées (14) des fibres de deux guides d'ondes lumineuses (10), comprenant deux prises mâles (20) symétriques l'une de l'autre par rapport à un plan, notamment de conformation identique, qui servent à maintenir chacune l'une des extrémités de fibre, dont chacune comporte un boîtier de prise, les boîtiers de prise étant réunis par un raccord commun (50), et qui comportent chacune trois tiges cylindriques parallèles (40), de même diamètre pour chaque prise, qui sont disposées dans un porte-tiges (30) du boîtier de prise (21) suivant une disposition triangulaire (46) entre elles en vue en coupe transversale et qui guident l'extrémité de fibre (14) dans l'intervalle axial (93) existant entre elles, d'une façon telle qu'en état de raccordement, ces tiges cylindriques (40) sont entourées par un manchon élastique (51) du raccord (50),
caractérisé en ce que le porte-tiges (30) comprend une cage (34) qui, en état de raccordement, maintient les tiges cylindriques (40) de manière qu'elles soient mobiles d'une manière flottante dans la direction radiale, mais sans possibilité de s'échapper, et qui est constituée de barrettes profilées (37), parallèles à l'axe et disposées chacune dans l'une des zones extérieures en forme de coin (44) délimitées en coupe transversale par les tiges cylindriques (40), et d'un disque extrême (39), réunissant ces barrettes profilées, qui sert de limite de position axiale pour les tiges cylindriques (40) et qui comporte un trou central (69) permettant le passage libre de l'extrémité de fibre (14),
tandis que les surfaces radialement extérieures (55) des tiges cylindriques (40) font librement saillie hors de la cage (34) entre les barrettes profilées (37) et définissent, en vue en coupe transversale, un cercle tangent (52) qui permet une action dans l'état de raccordement et qui a une plus grande dimension que celle de l'ouverture intérieure libre (53) du manchon (51) du raccord (50) à l'état non raccordé,
et en ce que, par rapport à son axe de symétrie (56), le manchon (51) est expansible radialement, avec la même force de serrage (43) pour chacun d'eux, en tous les emplacements auxquels il est au contact des surfaces extérieures libres (55) des tiges cylindriques (40) dans l'état de raccordement, de sorte que les tiges cylindriques (40) centrent l'extrémité de fibre (14) d'une manière exacte suivant le centre (16) du cercle tangent (52) et donc sur l'axe de symétrie (56) du manchon.

2. Dispositif de connexion suivant la revendication 1, caractérisé en ce que, sur un tronçon axial (59, 59′), le manchon (51), qui est notamment un manchon métallique, comporte plusieurs fentes radiales (58, 58′), de préférence au nombre de trois ou de six, qui ne s'étendent chacune que sur une partie (54, 54′) de la longueur du manchon (51) et qui sont disposées avec une répartition uniforme entre elles correspondant à une fraction (68) du périmètre circonférentiel du manchon,
et en ce que les prises mâles (20) sont agencées de façon à pouvoir être introduites dans les deux extrémités (95) du manchon (51), notamment dans des positions angulaires coïncidant entre elles.

3. Dispositif de connexion suivant la revendication 1 ou 2, caractérisé en ce que, dans les deux tronçons extrêmes (59) du manchon (51), les segments extrêmes (94) de la partie cylindrique du manchon qui sont situés chacun entre deux fentes extrêmes (58), de préférence les lignes médianes (57) de ces segments, constituent en permanence des emplacements (55) de venue en contact avec les tiges cylindriques associées (40) des deux prises mâles (20) dans l'état de raccordement,
en ce que, dans un tronçon central (59′), le manchon (51) comporte un groupe de fentes intermédiaires (58′), de préférence au nombre de trois ou six, également réparties d'une manière uniforme entre elles suivant une fraction (68) du périmètre circonférentiel du manchon, ces fentes intermédiaires (58′) étant décalées en position angulaire vis-à-vis des fentes extrêmes (58), en étant notamment disposées d'une manière symétrique par rapport à la ligne médiane (57) du segment associé du tronçon extrême correspondant (59) du manchon,
et en ce que les fentes intermédiaires (58′) s'étendent de manière à chevaucher (67) axialement les fentes extrêmes (58).

4. Dispositif de connexion suivant la revendication 1, caractérisé en ce que le manchon (97), qui est notamment un manchon métallique, est constitué d'au moins deux bagues d'extrémité frontale (98) qui sont espacées dans la direction axiale et sont réunies entre elles, de préférence par trois barrettes (99),
et en ce qu'à l'état assemblé, les barrettes (99) sont disposées dans l'alignement des emplacements de contact (55) des tiges cylindriques (40).

5. Dispositif de connexion suivant la revendication 4, caractérisé en ce que les barrettes (99) sont coudées radialement vers l'intérieur d'une manière symétrique et déterminent, entre elles, par leurs parties rectilignes centrales (100), de préférence parallèles à l'axe, une ouverture libre (103) dont la section circulaire est plus petite que le cercle (52) tangent aux tiges cylindriques (40).

6. Dispositif de connexion suivant une ou plusieurs des revendications 1 à 5, caractérisé en ce que les barrettes profilées (37) de la cage (34), qui ont notamment une configuration identique entre elles, définissent, en vue en coupe transversale, un cercle tangent (41) de plus petite dimension que la largeur libre (53) de l'ouverture du manchon (51) et, à l'exception d'un jeu latéral (45), remplissent chacune la zone extérieure (44) en forme de coin située entre des tiges cylindriques (40) voisines.

7. Dispositif de connexion suivant une ou plusieurs des revendications 1 à 6, caractérisé en ce que, sur sa surface extérieure, le disque extrême (39) de la cage (34) porte un collet (66), de préférence ouvert radialement (65) par endroits, qui sert à guider la coupe lors du sectionnement de l'extrémité de fibre (14) introduite et qui entoure le tronçon restant de cette extrémité de fibre (14) qui fait saillie par son trou axial (69).

8. Dispositif de connexion suivant une ou plusieurs des revendications 1 à 7, caractérisé en ce que la profondeur d'introduction des deux prises mâles (20) dans le manchon (51) est déterminée par la venue en contact frontal de leurs deux cages (34) au milieu du manchon, les surfaces frontales (17) des deux extrémités de fibre (14) étant situées à une distance axiale déterminée (18) l'une vis-à-vis de l'autre.

9. Dispositif de connexion suivant une ou plusieurs des revendications 1 à 8, caractérisé en ce que le porte-tiges (30) et sa cage (34), réalisée notamment d'une pièce avec ce dernier, sont en une matière plastique qui possède essentiellement le même coefficient de dilatation thermique que la fibre (14) du guide d'ondes lumineuses (13).

10. Dispositif de connexion suivant une ou plusieurs des revendications 1 à 9, caractérisé en ce que la cage (34) du porte-tiges (30) est entourée, à une certaine distance radiale, d'un fourreau de boîtier (29), notamment fendu, qui est de préférence réalisé d'une pièce avec le boîtier de prise (21) et qui s'emboîte dans un logement axial complémentaire (87) du raccord (50) dans l'état de raccordement.

11. Dispositif de connexion suivant une ou plusieurs des revendications 1 à 10, caractérisé en ce que le porte-tiges (30), pourvu de sa cage (34), les deux boîtiers de prise (21) et le raccord (50) sont agencés de façon à pouvoir être emboîtés les uns dans les autres, de façon à assurer leur immobilisation relative en rotation, à l'aide de surfaces axiales et/ou radiales de butée ou de guidage (80 ; 80′ ; 86; 76) et sont agencés de façon à pouvoir être montés en étant immobilisés axialement les uns vis-à-vis des autres à l'aide de moyens de fixation à encliquetage (81, 91) ou de moyens de verrouillage ou sont immobilisés axialement les uns sur les autres après le raccordement**,**
le boîtier de prise (21) comportant des nervures axiales de guidage (80, 80′) présentant des saillies d'encliquetage (81) et le raccord (50) comporte, à l'endroit de son logement axial (87), des entailles de guidage (86) présentant des évidements d'encliquetage (91).

12. Dispositif de connexion suivant une ou plusieurs des revendications 1 à 11, caractérisé en ce que le porte-tiges (30) comporte un organe de maintien, flexible et élastique, servant à recevoir et maintenir mécaniquement le guide d'ondes lumineuses (13).

13. Dispositif de connexion suivant la revendication 12, caractérisé en ce que l'organe de maintien est constitué d'une pince (70) servant à recevoir et maintenir mécaniquement le guide d'ondes lumineuses (13) pourvu de sa gaine.

14. Dispositif de connexion suivant la revendication 12 ou 13, caractérisé en ce que l'organe de maintien est constitué d'une bague conique de compression (49) comportant un perçage axial (79) permettant d'y enfiler l'extrémité de fibre (14) et en ce que le porte-tiges (30) comporte un logement conique (35) convergent vers la cage (34) et destiné à la bague de compression (49).

15. Dispositif de connexion suivant la revendication 13 ou 14, caractérisé en ce que la pince (70) comprend une douille conique (71) fendue axialement (72) et s'évasant vers l'extrémité libre (14) de la fibre et en ce qu'il est associé à cette douille conique (71) une pièce de compression(27) comportant une surface conique (60) complémentaire et disposée à l'intérieur du boîtier de prise (21), la douille conique (71) étant pourvue de dentures de blocage (77) dans la zone de sa ou ses fentes axiales (72).

16. Dispositif de connexion suivant une ou plusieurs des revendications 13 à 15, caractérisé en ce que la pince (70) comporte un élément de poussée (74), de préférence d'une pièce avec elle, qui pénètre dans le porte-tiges (30) dans l'état de montage et exerce une action sur la bague de compression (49) et en ce que la pince (70) comporte une butée, telle qu'un bourrelet de butée (75), limitant la profondeur de pénétration de l'élément de poussée (74) dans le porte-tiges (30).

17. Dispositif de connexion suivant une ou plusieurs des revendications 13 à 14, caractérisé en ce que l'organe de maintien est réalisé en une seule pièce, constituée d'une pince (70) et d'une douille fendue formée au moulage sur cette dernière et possédant une conicité de sens opposé à celle de la pince (70).

18. Dispositif de connexion suivant une ou plusieurs des revendications 1 à 17, caractérisé en ce que la pièce de compression (27) est constituée d'un élément de poussée réalisé, de préférence d'une pièce, sur un organe fileté, réalisé notamment sous la forme d'un écrou (24), et en ce que l'organe fileté (24) est agencé de façon à pouvoir, à l'état assemblé, être immobilisé par vissage sur un filetage complémentaire (23) prévu sur le boîtier de prise (21), tandis que, de préférence, cet organe fileté (24) est pourvu de raccords (64) pour des moyens de décharge de traction du câble (10) du guide d'ondes lumineuses.

19. Dispositif de connexion suivant une ou plusieurs des revendications 1 à 18, caractérisé en ce que le raccord d'assemblage (50, 50′) est constitué de parties de boîtier (82; 88), agencées de façon à pouvoir être montées l'une sur l'autre, qui maintiennent chacune le manchon (51) dans sa position centrale d'assemblage et comportent chacune, entourant ce manchon (51), les logements (87) destinés aux deux boîtiers de prise (21).

20. Dispositif de connexion suivant la revendication 19, caractérisé en ce que le manchon (51) prend appui, de façon à être immobilisé en rotation relative (92), dans un fourreau intérieur (85) réalisé notamment d'une pièce avec les moitiés de boîtier (82).

21. Dispositif de connexion suivant la revendication 19, caractérisé en ce que le manchon (51) comporte une collerette périphérique (96), disposée de préférence au milieu de sa longueur, qui, à l'état assemblé, est serrée, de façon à être immobilisée en rotation relative, entre deux plateaux (89) des parties de boîtier (88) faisant partie du raccord d'assemblage (50′) et qui est notamment divisée en plusieurs parties.
